# EUROPEAN PATENT APPLICATION

(11) **EP 4 273 606 A1**
(43) Date of publication of application: **08.11.2023**
(21) Application number: 21917285.5
(22) Date of filing: 22.12.2021
(51) Int. Cl.: G02B 13/00

(54) **LENS AND CAMERA MODULE HAVING LENS**

(30) Priority: 08.01.2021 CN 202110024506
(71) Applicant: Ningbo Sunny Opotech Co., Ltd., Ningbo, Zhejiang 315400 (CN)
(72) Inventor: LIU, Lin, Ningbo, Zhejiang 315400 (CN); TANAKA, Takehiko, Ningbo, Zhejiang 315400 (CN); YIN, Yueguang, Ningbo, Zhejiang 315400 (CN); PEI, Haipeng, Ningbo, Zhejiang 315400 (CN)
(74) Representative: VKK Patentanwälte PartG mbB
(86) International application number: PCT/CN2021/140516
(87) International publication number: WO 2022/148245

(57) **Abstract**

Disclosed are a lens (100) and a camera module with lens (100). The lens (100) includes a first lens unit (10), a second lens unit (20) and an adhesive structure (30), the first lens unit (10) includes a glass lens (11) and an opaque component (12), the opaque component (12) is covered on a periphery of the glass lens (11), the first lens unit (10) is arranged at a front end of the second lens unit (20) in an optical axis direction, the adhesive structure (30) includes an adhesive layer (31) and an adhesive fixing unit (32), the glass lens (11) is adhered to the second lens unit (20) by the adhesive layer (31), and the adhesive fixing unit (32) is located between the first lens unit (10) and the second lens unit (20), so that a bonding strength between the glass lens (11) and the second lens unit (20) is enhanced by the adhesive fixing unit (32).

## Description

### Technical Field

The invention relates to the technical field of optical imaging, and in particular to a lens and a camera module with lens.

### Background

With the popularization of mobile electronic devices, the related arts applied to camera modules (configured for acquiring images, such as videos or images) of the mobile electronic devices have made rapid progress and development. In recent years, the level of technology has shown an accelerating trend, especially in the field of electronic technology, which is developing at an astonishing speed. The competition of the camera modules is becoming increasingly intense, and the structures and performance of the camera modules have been greatly developed. Whether in terms of functionality or volumes, the camera modules are constantly developing toward the direction that people imagine, with highly compounded functions, highly compact and miniaturization volumes.

In the camera module of an existing mobile phone, a glass lens has a better resolution than a plastic lens, and under the same resolution conditions, the height of the glass lens is smaller, so that in order to reduce the height of the camera module, the glass lens is usually preferred. However, due to the high melting point of the glass lens, the existing processes cannot be presented in the same way as injection molding with high-temperature liquid flowing into a mold. Therefore, it is necessary to use the high-temperature hot pressing mode of the mold for molding, but in the high-temperature hot pressing mode, the temperature needs to be raised to soften a glass preform, which is generally roughly spherical in shape. During the hot pressing the glass preform, it is required to maintain the glass near a TG point, but the pressure should not be too high, Excessive pressure will cause the glass preform to break. A structural area of the glass lens also requires hot pressing molding, resulting in a small glue application area corresponding to the glass lens, such that the glue is insufficient or a bonding area between the glue and the glass lens is small, and accordingly, the bonding between an upper-group glass lens and a lower-group glass lens in a split lens is not firm.

### Summary

One main advantage of the invention is to provide a lens and a camera module with lens, wherein the lens includes a first lens unit and a second lens unit, and the first lens unit includes at least one glass lens, which is advantageous in reducing a height of the lens, thereby reducing an overall height of the camera module.

Another advantage of the invention is to provide a lens and a camera module with lens, wherein the lens adopts a glass lens, which is conducive to improving a resolution of the camera module.

Another advantage of the invention is to provide a lens and a camera module with lens, wherein the lens further includes at least one adhesive structure, and the adhesive structure is formed on a periphery of the glass lens, and the first lens unit and the second lens unit are fixed by the adhesive structure, thereby improving a stability of the lens.

Another advantage of the invention is to provide a lens and a camera module with lens, wherein the adhesive structure includes an adhesive layer and at least one adhesive fixing unit, the adhesive layer is formed between the glass lens and the second lens unit, and the at least one adhesive fixing unit is formed at the periphery of the glass lens, so as to improve a connection stability between the glass lens and the second lens unit by means of the adhesive fixing unit.

Another advantage of the invention is to provide a lens and a camera module with lens, wherein the second lens unit is provided with at least one adhesive groove, the adhesive fixing unit is formed in the adhesive groove to prevent glue overflow.

Another advantage of the invention is to provide a lens and a camera module with lens, wherein the first lens unit further includes an opaque component, the opaque component is located at an upper end of the glass lens, the opaque component is connected to the second lens unit by the adhesive fixing unit, and the stability of the connection between the glass lens and the second lens unit is stabilized by the opaque component.

Other advantages and features of the invention are fully embodied by the following detailed description and are implemented by a combination of means and apparatuses, which is specifically pointed out in the appended claims.

According to one aspect of the invention, a lens capable of achieving the above-mentioned and other objectives and advantages of the invention includes:
a first lens unit, wherein the first lens unit includes a glass lens and an opaque component, and the opaque component is covered on an outer periphery of the glass lens;
a second lens unit, wherein the first lens unit is arranged along an optical axis direction at a front end of the second lens unit; and
an adhesive structure, the adhesive structure includes an adhesive layer and an adhesive fixing unit, the glass lens is adhered to the second lens unit by the adhesive layer, and the adhesive fixing unit is located between the first lens unit and the second lens unit, so as to enhance a bonding strength between the glass lens and the second lens unit by means of the adhesive fixing unit.

In some embodiments of the invention, the adhesive fixing unit is arranged on the outer peripheral side surface of the glass lens and an upper end surface of the second lens unit, and the glass lens and the second lens unit are adhered together by the adhesive fixing unit.

In some embodiments of the invention, the adhesive fixing unit is arranged on a peripheral side surface of the glass lens, an inner side of the opaque component and an upper end surface of the second lens unit, and the glass lens, the opaque component and the second lens unit are adhered together by the adhesive fixing unit.

In some embodiments of the invention, the adhesive fixing unit is arranged on a lower side of the opaque component and an upper end surface of the second lens unit, and the opaque component and the second lens unit are adhered together by the adhesive fixing unit.

In some embodiments of the invention, the adhesive layer and the adhesive fixing unit are formed by curing adhesive.

In some embodiments of the invention, the glass lens includes an imaging part and an installation part which integrally extends outwards from the imaging part, the installation part of the glass lens is provided with an installation part upper surface and an installation part lower surface, the adhesive layer is arranged on the installation part lower surface of the installation part, the installation part of the glass lens is further provided with an installation part side surface, which is an arc-shaped surface.

In some embodiments of the invention, the second lens unit includes a lens barrel and at least one optical lens arranged in the lens barrel, the lens barrel includes a lens barrel upper end portion and a lens barrel lower end portion which integrally extends downwards from the lens barrel upper end portion, wherein the lens barrel upper end portion is provided with a lens barrel upper end surface and a mounting groove, the glass lens of the first lens unit is fixed to the lens barrel upper end surface of the lens barrel upper end portion by the adhesive structure, and the opaque component is fixed to the mounting groove of the lens barrel upper end portion.

In some embodiments of the invention, the second lens unit includes a lens barrel and at least one optical lens arranged in the lens barrel, the lens barrel includes a lens barrel upper end portion and a lens barrel lower end portion which integrally extends downwards from the lens barrel upper end portion, wherein the lens barrel upper end portion further includes an upper end portion main body and a lug boss which extends upwards from the periphery of the upper end portion main body, the glass lens, the upper end portion main body of the lens barrel upper end portion and the lug boss form an adhesive groove together, in which an adhesive for forming the adhesive fixing unit is applied to the adhesive groove.

In some embodiments of the invention, an adhesive gap is arranged between the opaque component and the glass lens, and when the opaque component is placed in the adhesive groove, the adhesive for forming the adhesive fixing unit is squeezed into the adhesive gap by the opaque component.

In some embodiments of the invention, the opaque component includes a fixed end and a crimping end which extends inwards from the fixed end, the crimping end of the opaque component is provided with a crimping surface, the fixed end of the opaque component is further provided with an inner-side inclined surface, and the inner-side inclined surface of the fixed end define the adhesive gap with a periphery of an installation part side surface of the installation part of the glass lens.

In some embodiments of the invention, the second lens unit includes a lens barrel and at least one optical lens arranged in the lens barrel, the lens barrel includes a lens barrel upper end portion and a lens barrel lower end portion which integrally extends downwards from the lens barrel upper end portion, the lens barrel upper end portion includes an upper end portion main body and a lug boss which extends upwards from the upper end portion main body, the lug boss separates an upper surface of the upper end portion main body and forms an inner adhesive groove and an outer adhesive groove, the adhesive for forming the adhesive layer is applied to the inner adhesive groove, and the adhesive for forming the adhesive fixing unit is applied to the outer adhesive groove.

In some embodiments of the invention, the glass lens has an optical effective region and an optical ineffective region, the optical ineffective region surrounds a periphery of the optical effective region, the adhesive layer of the adhesive structure is formed in the optical ineffective region of the glass lens, and a ratio of a length of the optical ineffective region of the glass lens to a diameter length of the glass lens is less than or equal to 0.07.

According to another aspect of the invention, the present application further provides a camera module, including:
a photosensitive assembly; and
a lens, wherein the lens is maintained on a photosensitive path of the photosensitive assembly, and the lens includes:
   a first lens unit, the first lens unit includes a glass lens and an opaque component, wherein the opaque component is covered on the outer periphery of the glass lens;
   a second lens unit, wherein the first lens unit is arranged along an optical axis direction at a front end of the second lens unit; and
   an adhesive structure, the adhesive structure includes an adhesive layer and an adhesive fixing unit, wherein the glass lens is adhered to the second lens unit by the adhesive layer, and the adhesive fixing unit is located between the first lens unit and the second lens unit, so as to enhance a bonding strength between the glass lens and the second lens unit by means of the adhesive fixing unit.

Further objectives and advantages of the invention will be fully embodied by understanding the following description and drawings.

These and other objectives, features and advantages of the invention are fully embodied by the following detailed description, drawings and claims.

### Brief Description of the Drawings

Fig. 1 is a structural schematic diagram of a camera module according to a first embodiment of the invention.
Fig. 2 is a structural schematic diagram of a camera module according to a second embodiment of the invention.
Fig. 3A and Fig. 3B are schematic diagrams of forming an adhesive fixing unit of the camera module according to the second embodiment of the invention.
Fig. 4 is a structural schematic diagram of a camera module according to a third embodiment of the invention.

### Detailed Description of the Embodiments

The following description is configured for disclosing the invention, so that those skilled in the art may implement the invention. Embodiments in the following description are merely examples, and those skilled in the art may conceive of other obvious variations. The basic principles of the invention defined in the following description may be applied to other implementation solutions, variation solutions, improvement solutions, equivalent solutions and other technical solutions which do not depart from the spirit and scope of the invention.

It should be understood by those skilled in the art that, in the disclosure, orientation or position relationships indicated by terms "longitudinal", "transverse", "upper", "lower", "front", "back", "left", "right", "vertical", "horizontal", "top", "bottom", "inside", "outside" and the like are orientation or position relationships shown on the basis of the drawings, and are merely for the convenience of describing the invention and simplifying the description, but do not indicate or imply that the referred apparatuses or elements must have specific orientations or must be constructed and operated in specific orientations, and thus the above terms cannot be construed as limitations to the invention.

It can be understood that, the term "a" / "an" should be understood as "at least one" or "one or more", that is, in an embodiment, the number of an element may be one, and in other embodiments, the number of the element may be a plurality of, and thus the term "a" / "an" cannot be understood as a limitation to the number.

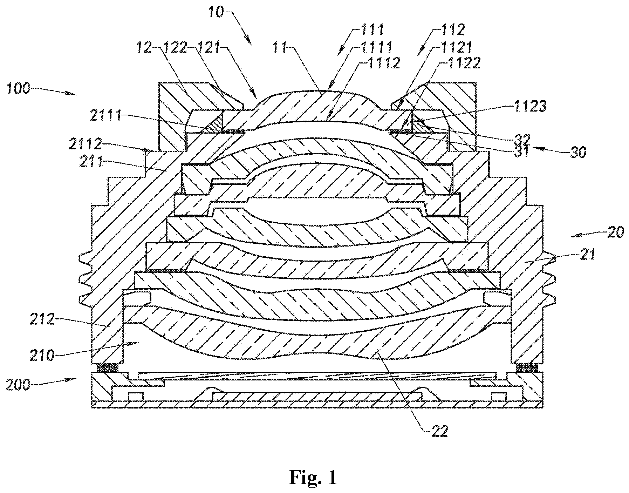

Referring to Fig. 1 in the drawings of the specification of the invention, a lens and a camera module with lens according to a first embodiment of the invention are set forth in the following description. The lens includes a first lens unit 10, a second lens unit 20, and at least one adhesive structure 30 configured for fixing the first lens unit 10 and the second lens unit 20. In short, the lens is designed with a split structure, and the first lens unit 10 is fixed to the second lens unit 20 by the adhesive structure 30. The first lens unit 10 includes a glass lens 11 and an opaque component 12, and there is at least one glass lens 11, and the opaque component 12 is fixedly arranged at an upper end of the second lens unit 20, and the glass lens 11 is crimped on the second lens unit 20 by the opaque component 12.

It is worth mentioning that in an embodiment of the invention, the glass lens 11 of the first lens unit 10 is made of glass material. The glass lens 11 of the first lens unit 10 is fixed to the upper end of the second lens assembly 20 by the adhesive structure 30.

Specifically, the glass lens 11 includes an imaging part 111 and an installation part 112 which integrally extends outwards from the imaging part 111, an effective imaging light of the camera module passes through the imaging part 111 of the glass lens 11, and the installation part 112 of the glass lens 11 is fixed to the second lens assembly 20 by the adhesive structure 30. The installation part 112 of the glass lens 11 is provided with an installation part upper surface 1121 and an installation part lower surface 1122, the installation part upper surface 1121 of the installation part 112 is oriented towards an object side of the camera module, the installation part lower surface 1122 of the installation part 112 is oriented towards an image side of the camera module. The installation part 112 of the glass lens 11 is further provided with an installation part side surface 1123, and the installation part side surface 1123 is formed on a periphery of the installation part 112.

It is worth mentioning that under a same refractive index condition, since a thickness of the glass lens is less than a thickness of a resin lens, a height of the camera module is better reduced by adopting the glass lens. Meanwhile, compared with the resin lens, when a temperature rises, a material deformation problem of a pure glass lens caused by an influence of the temperature is smaller and more stable, such that an optical resolution is better.

The adhesive structure 30 includes an adhesive layer 31 and an adhesive fixing unit 32, and there is at least one adhesive layer 31 and at least one adhesive fixing unit 32. The adhesive layer 31 is formed between the installation part 112 of the glass lens 11 and the second lens unit 20, and the adhesive fixing unit 32 is formed on a periphery of the installation part side surface 1123 of the glass lens 11 and above the second lens unit 20, so as to fix the glass lens 11 to the second lens unit 20 by means of the adhesive layer 31 and the adhesive fixing unit 32. In an embodiment of the invention, the adhesive fixing unit 32 is arranged on the periphery of the installation part side surface 1123 of the glass lens 11 and above the second lens unit 20. It should be understood that the installation part lower surface 1122 of the glass lens 11 is fixed to an upper end surface of the second lens unit 20 by the adhesive layer 31 of the adhesive structure 30, and the installation part side surface 123 of the glass lens 11 is fixed by the adhesive fixing unit 32 of the adhesive structure 30 to the upper end surface of the second lens unit 20 located on an outer side of the glass lens 11 by the adhesive fixing unit 32 of the adhesive structure 30. It should be understood that the adhesive fixing unit 32 enhances a fixed connection relationship between the glass lens 11 and the second lens unit 20, so that the glass lens 11 is more stably fixed with the second lens unit 20.

In an embodiment of the invention, the adhesive layer 31 and the adhesive fixing unit 32 of the adhesive structure 30 are formed by curing an adhesive (such as glue), the adhesive for forming the adhesive layer 31 is coated on the installation part lower surface 1122 of the installation part 112 and/or coated on a position of the second lens unit 20 corresponding to the installation part lower surface 1122 of the installation part 112. After the adhesive is cured, the adhesive layer 31 is formed between the installation part 112 of the glass lens 11 and the second lens unit 20. The adhesive for forming the adhesive fixing unit 32 is applied to the periphery of the installation part side surface 1123 of the glass lens 11 and above the second lens unit 20, and the adhesive fixing unit 32 is formed after the adhesive is cured. In another embodiment of the invention, other types of adhesives, such as a solid adhesive, a paste adhesive and a double-sided adhesive, etc are configured to form the adhesive layer 31 and the adhesive fixing unit 32.

It is worth mentioning that in an embodiment of the invention, the adhesive fixing unit 32 of the adhesive structure 30 is formed or arranged on the installation part side surface 1123 of the glass lens 11 and the upper end surface of the second lens unit 20, and the glass lens 11 is fixed to the second lens unit 20 by the adhesive fixing unit 32. In other words, the adhesive fixing unit 32 is not only adhered to the installation part side surface 1123 of the glass lens 11, but also is adhered to the upper end surface of the second lens unit 20, thereby stabilizing a fixed connection relationship between the glass lens 11 and the second lens unit 20.

The adhesive for forming the adhesive fixing unit 32 is coated on the installation part side surface 1123 of the glass lens 11, the adhesive slides to the upper surface of the second lens unit 20 under its own gravity. After the adhesive is cured, the adhesive fixing unit 32 is formed on the installation part side surface 1123 of the glass lens 11 and the upper surface of the second lens unit 20. It is worth mentioning that in an embodiment of the invention, a shape and a coverage degree of the formed adhesive fixing unit 32 are controlled by controlling a dosage of the adhesive for forming the adhesive fixing unit 32. In other words, in the embodiment of the invention, the adhesive fixing unit 32 does not have a specific shape or thickness, and the thickness, the shape, a range and the like of the adhesive fixing unit 32 are controlled by controlling the dosage of the adhesive applied. In an embodiment, an inclined surface is formed after the adhesive fixing unit 32 is cured, the inclined surface extends from an upper end of the installation part side surface 1123 of the glass lens 11 to an outer side of the upper end surface of the second lens unit 20.

In an embodiment of the invention, a coating width of the adhesive layer 31 is 0.32mm, and a coating width of the adhesive fixing unit 32 is 0.8mm. It should be understood that a width, a thickness and the like of the adhesive structure 30 are merely exemplary in the embodiment of the invention, but are not restrictive.

In an embodiment, the installation part side surface 1123 of the glass lens 11 is a curved surface, which is conducive to increasing a bonding area between the adhesive fixing unit 32 and the glass lens 11, thereby improving a bonding strength. More specifically, in an embodiment of the invention, the installation part side surface 1123 of the glass lens 11 is a convex surface structure. In another embodiment of the invention, the installation part side surface 1123 of the glass lens 11 is a rough surface, that is, the installation part side surface 1123 of the glass lens 11 is roughened, which is conducive to improving a bonding strength between the adhesive fixing unit 32 and the glass lens 11, and preventing a colloid from departing.

The second lens unit 20 includes a lens barrel 21 and an optical lens 22 arranged in the lens barrel 21, and there is at least one optical lens 22, the lens barrel 21 has a lens accommodating cavity 210, the at least one optical lens 22 is fixed by the lens barrel 21 to the lens accommodating cavity 210 of the lens barrel 21. The lens barrel 21 includes a lens barrel upper end portion 211 and a lens barrel lower end portion 212 which integrally extends downwards from the lens barrel upper end portion 211, and the first lens unit 10 is fixed to the lens barrel upper end portion 211 of the second lens unit 20. It is worth mentioning that in an embodiment of the invention, the optical lens 22 of the second lens unit 20 is a resin lens.

Specifically, the lens barrel upper end portion 211 has a lens barrel upper end surface 2111 and a mounting groove 2112, the glass lens 11 of the first lens unit 10 is fixed to the lens barrel upper end surface 2111 of the lens barrel upper end portion 211 by the adhesive structure 30, and the opaque component 12 is fixed to the mounting groove 2112 of the lens barrel upper end portion 211. It is worth mentioning that, the mounting groove 2112 is a step-shaped structure formed in a periphery of the lens barrel upper end surface 2111 and located lower than the lens barrel upper end surface 2111. The opaque component 12 is fixed to the mounting groove 2112 of the lens barrel upper end portion 211, and the glass lens 11 is crimped on the upper end of the second lens unit 20 by the opaque component 12.

In an embodiment of the invention, the glass lens 11 is a bare lens, the imaging part 111 of the glass lens 11 protrudes from the installation part 112 to an object side direction, that is, the imaging part 111 of the glass lens 11 is a protruding structure located at a center of the glass lens 11. The glass lens 11 has an optical effective region and an optical ineffective region, and the optical ineffective region surrounds a periphery of the optical effective region, the adhesive layer 31 of the adhesive structure 30 is formed in the optical ineffective region of the glass lens 11. It should be understood that, the optical effective region of the glass lens 11 is configured for collecting light and allowing the light to pass through, the optical ineffective region of the glass lens 11 corresponds to the adhesive layer 31 of the adhesive structure 30. It is worth mentioning that, the optical effective region is located on the imaging part 111 of the glass lens 11, and the optical ineffective region is located on the installation part 112 of the glass lens 11.

The imaging part 111 of the glass lens 11 has an object-side outer surface 1111 and an image-side inner surface 1112, the object-side outer surface 1111 is oriented towards the object side, the image-side inner surface is oriented towards the image side, and the object-side outer surface 1111 extends towards the object side direction relative to the image-side inner surface 1112, so as to form the protruding structure of the imaging part 111. It is worth mentioning that the imaging part 111 is approximately in arc-shaped or barrel-shaped, a top of the imaging part 111 is arc-shaped, and an arc-shaped surface of the imaging part 111 is configured for converging light, so that an incident light flux is increased, and the light reaches a chip for imaging after passing through. The image-side inner surface 1112 of the imaging part 111 extends toward the object side direction to form a concave, the concave is arc-shaped and is configured for diverging the light.

The opaque component 12 is configured for protecting the glass lens 11, the opaque component 12 is provided with a light inlet 121, and external light enters the glass lens 11 through the light inlet 121 of the opaque component 12. The opaque component 12 is further provided with a light convergence surface 122, the light convergence surface 122 obliquely extends outwards from the light inlet 121 of the opaque component 12, so as to converge the external light.

It is worth mentioning that under the same refractive index conditions, the thickness of the glass lens is less than the thickness of the resin lens, so that the height of the camera module is better reduced by adopting the glass lens. Compared with the resin lens, when the temperature rises, the material deformation problem of the pure glass lens caused by the influence of the temperature is smaller and more stable, such that the optical resolution is better. However, due to a high melting point of the glass lens, existing processes cannot be presented in the same way as injection molding with high-temperature liquid flows into a mold. Therefore, the glass lens 11 of the invention is molded by a high-temperature hot pressing of the mold. By the high-temperature hot pressing, the temperature needs to be raised to soften a glass preform of the glass lens 11, the glass preform is in generally roughly spherical in shape, and during a hot pressing of the glass preform, it is required to maintain the glass near a TG point. Excessive pressure will cause the glass preform to break, therefore the pressure is small during the hot pressing process of the glass lens 11, and accordingly, the installation part 112 of the prepared glass lens 11 is relatively small.

In an embodiment of the invention, a diameter of the optical effective region of the glass lens 11 is 3.48mm, a width of the optical ineffective region of the glass lens 11 is 0.32mm, and a diameter of the glass lens 11 is 4.6mm. It is worth mentioning that the specific structure and size of the glass lens 11 are merely exemplary in the embodiment of the invention, but are not restrictive. According to requirements of a lens resolution and other optical imaging performance, the glass lens 11 is also implemented as structures of other shapes or sizes. In an embodiment of the invention, a ratio of a length of the optical ineffective region of the glass lens 11 to a diameter length of the glass lens 11 is not greater than 0.07.

As shown in Fig. 1, the camera module includes a lens 100 and a photosensitive assembly 200, the lens 100 is maintained on a photosensitive path of the photosensitive assembly 200. The lens 100 is attached to the photosensitive assembly 200 by an adhesive, so as to be maintained on the photosensitive path of the photosensitive assembly 200. The photosensitive assembly 200 also includes a molded body, and the molded body covers electronic components (MOB); and the molded body covers a part of the photosensitive region (MOC) of a photosensitive chip. The lens 100 includes a lens carrier and an optical lens, the lens carrier is mounted on the photosensitive assembly 200 (for example, the lens carrier is attached to the photosensitive assembly by the adhesive), and the optical lens is carried in the lens carrier. It should be understood that the optical lens is the lens in the first embodiment described above. The lens includes a first lens unit 10, a second lens unit 20, and the adhesive structure 30 for fixing the first lens unit 10 to the second lens unit 20, therefore the specific structure of the optical lens is not repeatedly described herein.

The lens carrier in the camera module is implemented as a lens bracket, that is, the camera module is implemented as a fixed-focus camera module, and a relative position relationship between the optical lens and the photosensitive assembly 200 is kept constant. In another embodiment of the invention, the camera module is also implemented as other types of camera modules, which is not limited herein. For example, the camera module is implemented as a moving-focus camera module, that is, the lens carrier is implemented as a driving element, which is able to carry and drive the optical lens to move along the photosensitive path, so as to change the relative position relationship between the optical lens and the photosensitive assembly 200. As another example, the camera module is also implemented as an anti-shake camera module, that is, the lens carrier is implemented as an anti-shake motor, so as to realize an anti-shake function by means of the anti-shake motor. As another example, the camera module also includes components such as a prism, so as to form a periscopic camera module. The photosensitive assembly according to the embodiment of the invention includes a circuit board assembly and a photosensitive chip which is electrically connected to the circuit board assembly, the photosensitive chip is a photosensitive portion of the photosensitive assembly, and is configured for receiving imaging light from the outside and performing imaging.

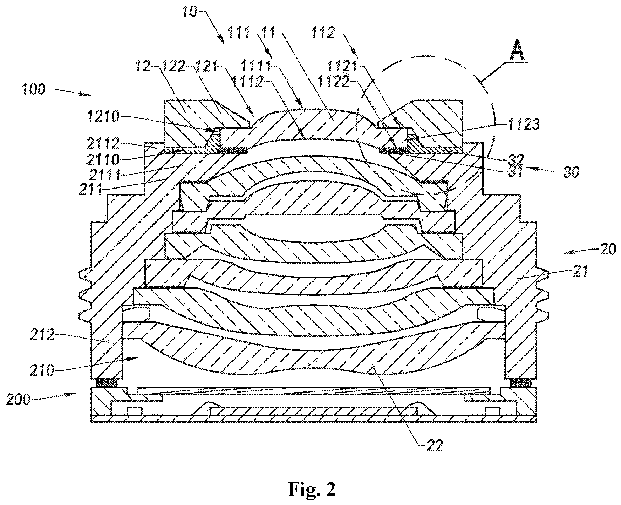

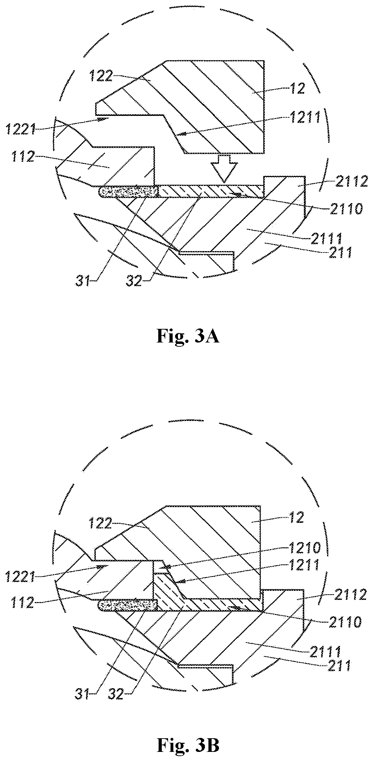

As shown in Figs. 2-3B, a camera module and a lens of the camera module according to a second embodiment of the invention are set forth in the following description. The lens of the camera module includes a first lens unit 10, a second lens unit 20, and an adhesive structure 30 for fixing the first lens unit 10 and the second lens unit 20, and there is at least one adhesive structure 30. In short, the lens is designed with a split structure, and the first lens unit 10 is fixed to the second lens unit 20 by the adhesive structure 30. The first lens unit 10 includes a glass lens 11 and an opaque component 12, and there is at least one glass lens 11, the opaque component 12 is fixedly arranged at an upper end of the second lens unit 20, and the glass lens 11 is crimped on the second lens unit 20 by the opaque component 12.

In the embodiment of the invention, a specific structure of the glass lens 11 of the first lens unit 10 is the same as that in the first embodiment mentioned above. Differences lie in the adhesive structure 30 and the second lens unit 20. The adhesive structure 30 includes an adhesive layer 31 and an adhesive fixing unit 32, the adhesive layer 31 is formed on the installation part 112 of the glass lens 11 and the upper end of the second lens unit 20, the adhesive fixing unit 32 is formed on the periphery of the installation part side surface 1123 of the glass lens 11, and the glass lens 11, the opaque component 12 and the second lens unit 20 are fixedly connected by the adhesive fixing unit 32. In other words, the adhesive fixing unit 32 is formed among the glass lens 11, the opaque component 12 and the second lens unit 20, so that the adhesive fixing unit 32 integrally connects the glass lens 11, the opaque component 12 and the second lens unit 20 are in a fixed manner.

Specifically, the second lens unit 20 includes a lens barrel 21 and an optical lens 22 arranged in the lens barrel 21, and there is at least one optical lens 22, the lens barrel 21 includes a lens barrel upper end portion 211 and a lens barrel lower end portion 212 which integrally extends downwards from the lens barrel upper end portion 211, and the first lens unit 10 is fixed to the lens barrel upper end portion 211 of the second lens unit 20 by the adhesive structure 30. The lens barrel upper end portion 211 includes an upper end portion main body 2111 and a lug boss 2112 which extends upwards from the outer periphery of the upper end portion main body 2111, the glass lens 11, the upper end portion main body 2111 of the lens barrel upper end portion 211 and the lug boss 2112 jointly form an adhesive groove 2110, an adhesive for forming the adhesive fixing unit 32 is applied to the adhesive groove 2110, and the adhesive fixing unit 32 is formed in the adhesive groove 2110 to connect the glass lens 11, the opaque component 12 and the second lens unit 20 together. It should be understood that the adhesive is applied to the adhesive groove 2110, and the lug boss 2112 is configured for supporting the opaque component 12 and preventing the adhesive from flowing out.

The opaque component 12 of the first lens unit 10 is fixed to the adhesive groove 2110 by the adhesive fixing unit 32 of the adhesive structure 30, and the opaque component 12 is fixedly connected to the glass lens 11 and the lens barrel 21 of the second lens unit 20 by the adhesive fixing unit 32.

It is worth mentioning that the adhesive for forming the adhesive fixing unit 32 is applied to the adhesive groove 2110, and when the opaque component 12 of the first lens unit 10 is placed in the adhesive groove 2110, the opaque component 12 squeezes the adhesive, so that the adhesive is applied to the outer periphery of the installation part side surface 1123 of the glass lens 11.

There is an adhesive gap 1210 arranged between the opaque component 12 and the glass lens 11, when the opaque component 12 is placed in the adhesive groove 2110, the adhesive for forming the adhesive fixing unit 32 is squeezed into the adhesive gap 1210 by the opaque component. The adhesive is cured in the adhesive gap 1210 between the opaque component 12 and the glass lens 11, so as to form the adhesive fixing unit 32. In an embodiment of the invention, the adhesive is squeezed by the opaque component 12, and the adhesive gap 1210 is filled with the adhesive.

The opaque component 12 includes a fixed end 121 and a crimping end 122 which extends inwards from the fixed end 121, the fixed end 121 of the opaque component 12 is fixed in the adhesive groove 2110 by the adhesive fixing unit 32, the crimping end 122 is crimped on the upper end of the glass lens 11, so as to protect the glass lens 11 and to prevent the glass lens 11 from falling off. The crimping end 122 of the opaque component 12 is provided with a crimping surface 1221, and the crimping surface 1221 is closely crimped on the glass lens 11 when being fixed. The fixed end 121 of the opaque component 12 is further provided with an inner-side inclined surface 1211. It is worth mentioning that the inner-side inclined surface 1211 of the fixed end 121 of the opaque component 12 and the periphery of the installation part side surface 1123 of the installation part 112 of the glass lens 11 define the adhesive gap 1210. In other words, when the opaque component 12 is placed in the adhesive groove 2110, the adhesive for forming the adhesive fixing unit 32 is squeezed into the adhesive gap 1210, so that the adhesive fixing unit 32 is formed in the adhesive gap 1210, and the opaque component 12 and the glass lens 11 are fixedly connected by the adhesive fixing unit 32. In an embodiment, the inner-side inclined surface 1211 obliquely extends outwards and downwards from an inner side of the crimping surface 1221 to a bottom of the fixed end 121.

It should be understood that the bottom of the fixed end 121 of the opaque component 12 is fixedly connected to the lens barrel upper end portion 211 of the lens barrel 21 by the adhesive fixing unit 32. Therefore, the adhesive fixing unit 32 is also able to fix the opaque component 12 to the lens barrel 21 of the second lens unit 20, thereby increasing a connection strength between the first lens unit 10 and the second lens unit 20.

In an embodiment of the invention, a width of the adhesive layer 31 of the adhesive structure 30 is 0.32mm, and a width of the adhesive fixing unit 32 is 0.87mm. A width of the adhesive gap 1210 between the installation part side surface 1123 of the installation part 112 of the glass lens 11 and the opaque component 12 is 0.15mm. A ratio of a thickness of the adhesive fixing unit 32 between the glass lens 11 and the opaque component 12 to a thickness of the adhesive fixing unit 32 between the opaque component 12 and the lens barrel 21 is 10: 1. It should be understood that in the embodiment of the invention, the width and thickness of the adhesive structure 30 are merely exemplary, but are not restrictive.

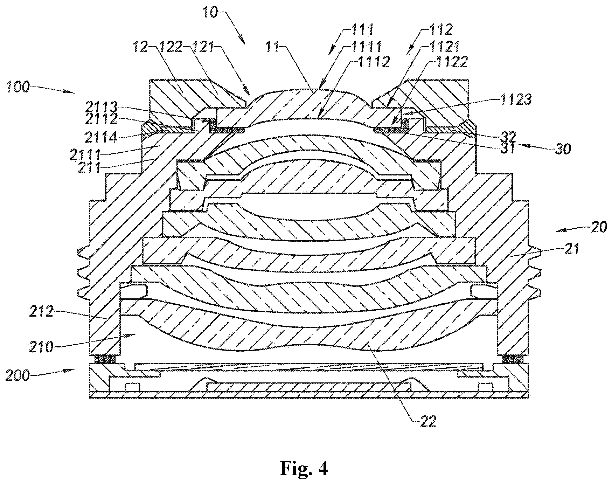

As shown in Fig. 4, according to a third embodiment of the invention, a camera module and a lens of the camera module are set forth in the following description. The lens of the camera module includes a first lens unit 10, a second lens unit 20, and an adhesive structure 30 for fixing the first lens unit 10 and the second lens unit 20, and there is at least one adhesive structure 30. In short, the lens is designed with a split structure, the first lens unit 10 is fixed to the second lens unit 20 by the adhesive structure 30. The first lens unit 10 includes a glass lens 11 and an opaque component 12, and there is at least one glass lens 11, the opaque component 12 is fixedly arranged at an upper end of the second lens unit 20, and the glass lens 11 is crimped on the second lens unit 20 by the opaque component 12.

In the embodiment of the invention, a specific structure of the glass lens 11 of the first lens unit 10 is the same as that in the first embodiment. Differences lie in the adhesive structure 30 and the second lens unit 20. The adhesive structure 30 includes an adhesive layer 31 and an adhesive fixing unit 32, the adhesive layer 31 is formed on the installation part 112 of the glass lens 11 and the upper end of the second lens unit 20, the adhesive fixing unit 32 is formed between the opaque component 12 and the second lens unit 20, and the opaque component 12 and the second lens unit 20 are fixedly connected by the adhesive fixing unit 32. A difference with the above first and second embodiments lies in that the adhesive fixing unit 32 is configured for fixedly connecting the opaque component 12 and the second lens unit 20, therefore a connection relationship between the glass lens 11 and the second lens unit 20 is enhanced by the opaque component 12.

Specifically, the second lens unit 20 includes a lens barrel 21 and an optical lens 22 arranged in the lens barrel 21, and there is at least one optical lens 22, the lens barrel 21 includes a lens barrel upper end portion 211 and a lens barrel lower end portion 212 which integrally extends downwards from the lens barrel upper end portion 211, and the first lens unit 10 is fixed to the lens barrel upper end portion 211 of the second lens unit 20 by the adhesive structure 30. The lens barrel upper end portion 211 includes an upper end portion main body 2111 and a lug boss 2112 which extends upwards from the upper end portion main body 2111, the lug boss 2112 separates a surface of the upper end portion main body 2111 and forms an inner adhesive groove 2113 and an outer adhesive groove 2114, the adhesive for forming the adhesive layer 31 is applied to the inner adhesive groove 2113, and the adhesive for forming the adhesive fixing unit 32 is applied to the outer adhesive groove 2114. In other words, the adhesive layer 31 is formed in the inner adhesive groove 2113, and the adhesive fixing unit 32 is formed in the outer adhesive groove 2114. The glass lens 11 of the first lens unit 10 is fixed in the inner adhesive groove 2113 of the lens barrel 21 by the adhesive layer 31, and the opaque component 12 is fixed in the outer adhesive groove 2114 of the lens barrel 21 by the adhesive fixing unit 32.

It is worth mentioning that the lug boss 2112 of the lens barrel 21 limits a movement of the glass lens 11, and prevents the adhesive for forming the adhesive layer 31 from overflowing from the inner adhesive groove 2113. When the glass lens 11 squeezes the adhesive in the inner adhesive groove 2113, the adhesive will overflow upwards from the inner adhesive groove 2113, and the adhesive is applied to the installation part side surface 1123 of the installation part 112 of the glass lens 11, which is beneficial to improving a bonding strength. In an embodiment of the invention, a width of the adhesive layer 31 of the adhesive structure 30 is 0.44mm, and a width of the adhesive fixing unit 32 is 0.87mm.

It should be understood by those skilled in the art that the foregoing description and the embodiments of the invention shown in the drawings are merely used as examples, but do not limit the invention. The objectives of the invention have been completely and effectively implemented. The functions and structural principles of the invention have been shown and described in the embodiments, and without departing from the principles, the embodiments of the invention may have any deformations or modifications.

## Claims

1. A lens, comprising:
a first lens unit, wherein the first lens unit comprises a glass lens and an opaque component, and the opaque component is covered on an outer periphery of the glass lens;
a second lens unit, wherein the first lens unit is arranged along an optical axis direction at a front end of the second lens unit; and
an adhesive structure, the adhesive structure comprises an adhesive layer and an adhesive fixing unit, the glass lens is adhered to the second lens unit by the adhesive layer, and the adhesive fixing unit is located between the first lens unit and the second lens unit, so as to enhance a bonding strength between the glass lens and the second lens unit by means of the adhesive fixing unit.

2. The lens according to claim 1, wherein the adhesive fixing unit is arranged on an outer peripheral side surface of the glass lens and an upper end surface of the second lens unit, and the glass lens and the second lens unit are adhered together by the adhesive fixing unit.

3. The lens according to claim 1, wherein the adhesive fixing unit is arranged on a peripheral side surface of the glass lens, an inner side of the opaque component and an upper end surface of the second lens unit, and the glass lens, the opaque component and the second lens unit are adhered together by the adhesive fixing unit.

4. The lens according to claim 1, wherein the adhesive fixing unit is arranged on a lower side of the opaque component and an upper end surface of the second lens unit, and the opaque component and the second lens unit are adhered together by the adhesive fixing unit.

5. The lens according to any one of claims 2-4, wherein the adhesive layer and the adhesive fixing unit are formed by curing adhesive.

6. The lens according to any one of claims 2-4, wherein the glass lens comprises an imaging part and an installation part which integrally extends outwards from the imaging part, the installation part of the glass lens is provided with an installation part upper surface and an installation part lower surface, the adhesive layer is arranged on the installation part lower surface of the installation part, the installation part of the glass lens is further provided with an installation part side surface, which is an arc-shaped surface.

7. The lens according to claim 2, wherein the second lens unit comprises a lens barrel and at least one optical lens arranged in the lens barrel, the lens barrel comprises a lens barrel upper end portion and a lens barrel lower end portion which integrally extends downwards from the lens barrel upper end portion, the lens barrel upper end portion is provided with a lens barrel upper end surface and a mounting groove, the glass lens of the first lens unit is fixed to the lens barrel upper end surface of the lens barrel upper end portion by the adhesive structure, and the opaque component is fixed to the mounting groove of the lens barrel upper end portion.

8. The lens according to claim 3, wherein the second lens unit comprises a lens barrel and at least one optical lens arranged in the lens barrel, the lens barrel comprises a lens barrel upper end portion and a lens barrel lower end portion which integrally extends downwards from the lens barrel upper end portion, the lens barrel upper end portion further comprises an upper end portion main body and a lug boss which extends upwards from a periphery of the upper end portion main body, the glass lens, the upper end portion main body of the lens barrel upper end portion and the lug boss form an adhesive groove together, in which an adhesive for forming the adhesive fixing unit is applied to the adhesive groove.

9. The lens according to claim 8, wherein an adhesive gap is arranged between the opaque component and the glass lens, and when the opaque component is placed in the adhesive groove, the adhesive for forming the adhesive fixing unit is squeezed into the adhesive gap by the opaque component.

10. The lens according to claim 9, wherein the opaque component comprises a fixed end and a crimping end which extends inwards from the fixed end, the crimping end of the opaque component is provided with a crimping surface, the fixed end of the opaque component is further provided with an inner-side inclined surface, and the inner-side inclined surface of the fixed end define the adhesive gap with a periphery of an installation part side surface of an installation part of the glass lens.

11. The lens according to claim 4, wherein the second lens unit comprises a lens barrel and at least one optical lens arranged in the lens barrel, the lens barrel comprises a lens barrel upper end portion and a lens barrel lower end portion which integrally extends downwards from the lens barrel upper end portion, the lens barrel upper end portion comprises an upper end portion main body and a lug boss which extends upwards from the upper end portion main body, the lug boss separates an upper surface of the upper end portion main body and forms an inner adhesive groove and an outer adhesive groove, an adhesive for forming the adhesive layer is applied to the inner adhesive groove, and the adhesive for forming the adhesive fixing unit is applied to the outer adhesive groove.

12. The lens according to any one of claims 1-4, wherein the glass lens has an optical effective region and an optical ineffective region, the optical ineffective region surrounds a periphery of the optical effective region, the adhesive layer of the adhesive structure is formed in the optical ineffective region of the glass lens, and a ratio of a length of the optical ineffective region of the glass lens to a diameter length of the glass lens is less than or equal to 0.07.

13. A camera module, comprising:
a photosensitive assembly; and
a lens, wherein the lens is maintained on a photosensitive path of the photosensitive assembly, and the lens comprises:
a first lens unit, the first lens unit comprises a glass lens and an opaque component, wherein the opaque component is covered on an outer periphery of the glass lens;
a second lens unit, wherein the first lens unit is arranged along an optical axis direction at a front end of the second lens unit; and
an adhesive structure, the adhesive structure comprises an adhesive layer and an adhesive fixing unit, wherein the glass lens is adhered to the second lens unit by the adhesive layer, and the adhesive fixing unit is located between the first lens unit and the second lens unit, so as to enhance a bonding strength between the glass lens and the second lens unit by means of the adhesive fixing unit.

14. The camera module according to claim 13, wherein the adhesive fixing unit is arranged on an outer peripheral side surface of the glass lens and an upper end surface of the second lens unit, and the glass lens and the second lens unit are adhered together by the adhesive fixing unit.

15. The camera module according to claim 13, wherein the adhesive fixing unit is arranged on a peripheral side surface of the glass lens, an inner side of the opaque component and an upper end surface of the second lens unit, and the glass lens, the opaque component and the second lens unit are adhered together by the adhesive fixing unit.

16. The camera module according to claim 13, wherein the adhesive fixing unit is arranged on a lower side of the opaque component and an upper end surface of the second lens unit, and the opaque component and the second lens unit are adhered together by the adhesive fixing unit.

17. The camera module according to any one of claims 14-16, wherein the adhesive layer and the adhesive fixing unit are formed by curing adhesive.

18. The camera module according to any one of claims 14-16, wherein the glass lens comprises an imaging part and an installation part which integrally extends outwards from the imaging part, the installation part of the glass lens is provided with an installation part upper surface and an installation part lower surface, the adhesive layer is arranged on the installation part lower surface of the installation part, the installation part of the glass lens is further provided with an installation part side surface, and the installation part side surface is an arc-shaped surface.

19. The camera module according to claim 14, wherein the second lens unit comprises a lens barrel and at least one optical lens arranged in the lens barrel, the lens barrel comprises a lens barrel upper end portion and a lens barrel lower end portion which integrally extends downwards from the lens barrel upper end portion, the lens barrel upper end portion is provided with a lens barrel upper end surface and a mounting groove, the glass lens of the first lens unit is fixed to the lens barrel upper end surface of the lens barrel upper end portion by the adhesive structure, and the opaque component is fixed to the mounting groove of the lens barrel upper end portion.

20. The camera module according to claim 15, wherein the second lens unit comprises a lens barrel and at least one optical lens arranged in the lens barrel, the lens barrel comprises a lens barrel upper end portion and a lens barrel lower end portion which integrally extends downwards from the lens barrel upper end portion, the lens barrel upper end portion further comprises an upper end portion main body and a lug boss which extends upwards from a periphery of the upper end portion main body, the glass lens, the upper end portion main body of the lens barrel upper end portion and the lug boss form an adhesive groove together, in which an adhesive for forming the adhesive fixing unit is applied to the adhesive groove.

21. The camera module according to claim 20, wherein an adhesive gap is arranged between the opaque component and the glass lens, and when the opaque component is placed in the adhesive groove, the adhesive for forming the adhesive fixing unit is squeezed into the adhesive gap by the opaque component.

22. The camera module according to claim 21, wherein the opaque component comprises a fixed end and a crimping end which extends inwards from the fixed end, the crimping end of the opaque component is provided with a crimping surface, the fixed end of the opaque component is further provided with an inner-side inclined surface, and the inner-side inclined surface of the fixed end define the adhesive gap with a periphery of an installation part side surface of an installation part of the glass lens.

23. The camera module according to claim 16, wherein the second lens unit comprises a lens barrel and at least one optical lens arranged in the lens barrel, the lens barrel comprises a lens barrel upper end portion and a lens barrel lower end portion which integrally extends downwards from the lens barrel upper end portion, the lens barrel upper end portion comprises an upper end portion main body and a lug boss which extends upwards from the upper end portion main body, the lug boss separates an upper surface of the upper end portion main body and forms an inner adhesive groove and an outer adhesive groove, an adhesive for forming the adhesive layer is applied to the inner adhesive groove, and the adhesive for forming the adhesive fixing unit is applied to the outer adhesive groove.

24. The camera module according to any one of claims 14-16, wherein the glass lens has an optical effective region and an optical ineffective region, the optical ineffective region surrounds a periphery of the optical effective region, the adhesive layer of the adhesive structure is formed in the optical ineffective region of the glass lens, and a ratio of a length of the optical ineffective region of the glass lens to a diameter length of the glass lens is less than or equal to 0.07.
